# DEMANDE DE BREVET EUROPEEN

(11) **EP 1 460 745 A2**
(43) Date de publication de la demande: **22.09.2004**
(21) Numéro de dépôt: 04100750.1
(22) Date de dépôt: 26.02.2004
(51) Int. Cl.: H02J 7/00

(54) **Procédé et dispositif de recharge de systèmes électroniques portables.**

(30) Priorité: 11.03.2003 FR 0302989
(71) Demandeur: COQ Lionel, 66350 Toulouges (FR); GRAU Sébastien, 11100 COURSAN (FR)
(72) Inventeur: Grau, Sébastien, 11100 Coursan (FR); Coq, Lionel, 66350 Toulouges (FR); Castel, Michel, 34095 Montpellier cédex 05 (FR); Gilbergues, Cyril, 12300 Decazeville (FR)
(74) Mandataire: Ravina, Bernard

(57) **Abrégé**

Le dispositif de recharge (100) de systèmes électroniques portables (150, 155) comporte :
- au moins un casier (105 à 108, 170, 171) de protection de système électronique portable en cours de recharge,
- au moins un moyen d'alimentation électrique (135, 136, 137, 140) d'une batterie (151, 156) de système électronique portable dans chaque dit casier,
- un moyen de gestion de casier (110) adapté à contrôler, d'une part, l'alimentation électrique de la batterie d'un système électronique portable placé à l'intérieur d'un casier et, d'autre part, l'accès à chaque casier.

Dans des modes de réalisation, au moins un casier de protection comporte des raccords (160 à 163, 180 à 183) de recharge possédant différentes formes adaptées à des prises de recharge de systèmes électroniques portables.

Dans des modes de réalisation, le moyen de gestion comporte une interface utilisateur (115, 120) comportant un moyen d'identification d'utilisateur.

## Description

La présente invention concerne un procédé et un dispositif de recharges de systèmes électroniques portables. Elle s'applique, en particulier, à la recharge de téléphones, assistants personnels et ordinateurs portables dans des lieux publics.

Chaque utilisateur d'un téléphone portable, d'un PDA (pour personal digital assistant ou assistant numérique personnel), d'un ordinateur portable a déjà eu la malheureuse expérience d'avoir des batteries vides loin de son domicile ou de son lieu de travail.

On connaît des systèmes de recharge manuels que l'utilisateur actionne avec une manivelle, par exemple, pour recharger partiellement les batteries d'un téléphone portable. Ce type de système est encombrant, inapplicable aux ordinateurs portables, du fait de leurs consommation, et ne permet qu'une recharge très limitée (quelques minutes de communication) du téléphone portable.

La présente invention entend remédier à ces inconvénients.

A cet effet, la présente invention vise, selon un premier aspect, un dispositif de recharge de systèmes électroniques portables, caractérisé en ce qu'il comporte :
- au moins un casier de protection de système électronique portable en cours de recharge,
- au moins un moyen d'alimentation électrique d'une batterie de système électronique portable dans chaque dit casier,
- un moyen de gestion de casier adapté à contrôler, d'une part, l'alimentation électrique de la batterie d'un système électronique portable placé à l'intérieur d'un casier et, d'autre part, l'accès à chaque casier.

Grâce à ces dispositions, un utilisateur peut laisser son système électronique portable à recharger sous le contrôle du moyen de gestion de casier et en toute sécurité puisque le système électronique portable est protégé dans un dit casier.

Selon des caractéristiques particulières, au moins un dit casier de protection comporte des raccords de recharge possédant différentes formes adaptées à des connecteurs de recharge de systèmes électroniques portables.

Grâce à ces dispositions, les raccords sont protégés par les casiers et il n'y a pas de risque de commander une alimentation électrique dans un casier et une ouverture d'un autre casier.

Selon des caractéristiques particulières, le moyen de gestion comporte une interface utilisateur comportant un moyen d'identification d'utilisateur.

Grâce à ces dispositions, seuls les utilisateurs autorisés ou payants peuvent avoir accès au service offert par le dispositif de recharge.

Selon des caractéristiques particulières, le moyen de gestion est adapté à interrompre l'alimentation électrique d'une batterie de système électronique portable après une durée d'alimentation maximale prédéterminée.

Grâce à ces dispositions, le risque d'endommager une batterie par excès de recharge est limité.

Selon des caractéristiques particulières, le moyen de gestion comporte un moyen de sélection d'un type de batterie de système électronique portable à recharger.

Selon des caractéristiques particulières, le moyen de gestion comporte un moyen d'accès à des caractéristiques de recharge de différents types de système électronique portable.

Grâce à chacune de ces dispositions, l'alimentation électrique fournie peut dépendre des caractéristiques du système électronique portable à recharger.

Selon des caractéristiques particulières, le moyen de gestion comporte une base de données de caractéristiques électriques de différents types de système électronique portable.

Selon des caractéristiques particulières, le moyen de gestion comporte un moyen de communication sur un réseau informatique et est adapté à mettre à jour la base de données de caractéristiques électriques de batteries de systèmes électroniques portables.

Grâce à chacune de ces dispositions, le moyen de gestion peut sélectionner la valeurs des tensions et ampérages de recharge et, éventuellement, optimiser ces valeurs au cours de la recharge de la batterie du système électronique portable.

Selon des caractéristiques particulières, le dispositif tel que succinctement exposé ci-dessus comporte un moyen de détection de diminution de la tension aux bornes de la batterie et en ce que le moyen de gestion est adapté à commander l'arrêt de l'alimentation électrique lorsque le moyen de détection détecte une diminution de la tension aux bornes de la batterie.

Grâce à ces dispositions, lorsque la batterie arrive à sa charge maximale, la recharge est interrompue de telle manière que la batterie ne risque pas d'être détériorée.

Selon des caractéristiques particulières, le moyen de gestion comporte un moyen de lecture de carte à mémoire conservant un code secret et le moyen de gestion est adapté à commander l'ouverture d'un casier après fourniture par l'utilisateur dudit code secret et vérification que ledit code secret correspond au code secret conservé par la carte à mémoire.

Grâce à ces dispositions, l'utilisateur n'a pas à mémoriser d'autre code secret que celui de sa carte à mémoire, par exemple une carte bancaire ou une pièce d'identité.

Selon des caractéristiques particulières, le moyen de gestion comporte un moyen de transfert permanent à l'utilisateur d'un code secret et le moyen de gestion est adapté à commander l'ouverture d'un casier après fourniture par l'utilisateur dudit code secret et vérification que ledit code secret correspond au code secret transmis à l'utilisateur.

Grâce à ces dispositions, l'utilisateur n'a pas à mémoriser le code secret puisqu'un transfert permanent, par exemple par message court (connu sous le nom de "SMS" pour "short message system") ou d'un ticket imprimé de ce code secret a été effectué.

La présente invention vise, selon un deuxième aspect, un procédé de recharge de systèmes électroniques portables, caractérisé en ce qu'il comporte :
- une étape d'ouverture d'un casier de protection de système électronique portable,
- une étape de fermeture dudit casier,
- une étape de recharge d'une batterie dudit système électronique portable,
- une étape d'identification dudit utilisateur,
- une étape d'ouverture dudit casier.

Les avantages, buts et caractéristiques particulières de ce procédé étant similaires à ceux du dispositif tel que succinctement exposé ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés dans lesquels :
- la figure 1 représente, schématiquement, un mode de réalisation particulier du dispositif objet de la présente invention et
- la figure 2 représente, schématiquement, un organigramme d'étapes d'un mode de réalisation particulier du procédé objet de la présente invention.

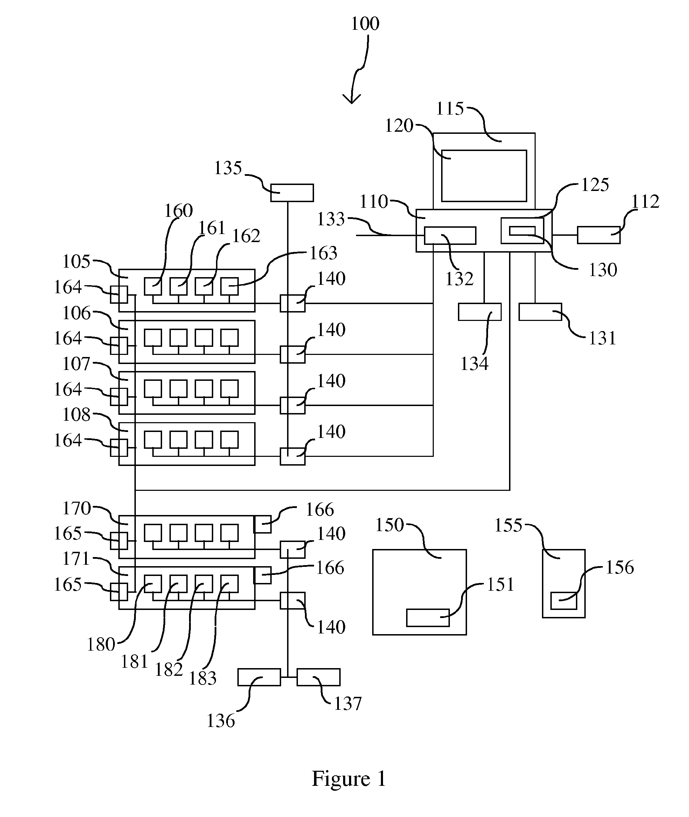

On observe, en figure 1, des systèmes électroniques portables 150 et 155 comportant des batteries, respectivement 151 et 156 et un dispositif de recharge 100 comportant :
- quatre casiers (ou "boîtiers") 105 à 108 munis, chacun, d'un moyen de verrouillage 164 et de quatre raccords d'alimentation 160 à 163, pour prises d'alimentation de téléphones portables,
- deux tiroirs 170 et 171 munis, chacun, d'un moyen de verrouillage 165, d'un système d'ouverture/fermeture automatique 166 et de quatre raccords d'alimentation 180 à 183 pour prises d'alimentation d'ordinateurs portables,
- un ordinateur (carte PC industrielle) 110 comportant une imprimante de ticket 112, un écran d'affichage 115, un écran tactile (ou matrice tactile) 120, une mémoire de programme 125, une base de données 130, un modem 132 relié à un réseau informatique 133, un lecteur de cartes à mémoire 134 et un moyen de réception de pièces de monnaie (ou "monnayeur") 131, une liaison série à protocole industriel (RS 485) pour le contrôle du circuit de régulation 140,
- un circuit de régulation 140 par casier et par tiroir, gérés par microcontrôleur et
- trois alimentations électriques à découpage 135, pour les téléphones portables, 136 et 137, pour les ordinateurs portables.

Les systèmes électroniques portables 150 et 155 sont, par exemple, des ordinateurs portables, des téléphones mobiles, des pageurs, des assistants personnels connus sous le nom de "PDA" (pour personal digital assistant). Ils disposent de connecteurs pour la recharge de leur batterie. Les raccords de recharge 160 à 163 possèdent différentes formes adaptées aux connecteurs de recharge des systèmes électroniques portables.

Le dispositif de recharge 100 est préférentiellement intégré dans du mobilier, en intérieur ou en extérieur. Il est préférentiellement suffisamment étanche pour supporter les intempéries et les types de lavage appliqués au lieu où il se trouve (aéroport, hall d'entreprise, hall d'hôtel, rue ...). Le dispositif de recharge est conforme aux normes d'étanchéité IP65.

Les quatre casiers 105 à 108 ainsi que les deux tiroirs 170 et 171, appelés de manière générique "casiers", comportent des parois rigides (par exemple en acier ou aluminium de 1,5 millimètres d'épaisseur) et une porte permettant d'introduire le système électronique portable à recharger, d'accéder aux raccords 160 à 163 et 180 à 183, de brancher le système électronique portable sur l'un de ces raccords, de laisser le système électronique portable en sécurité grâce à une serrure électrique commandée par l'ordinateur 110. Dans le mode de réalisation décrit et représenté, les casiers sont différents selon qu'ils sont destinés à recevoir des téléphones mobiles ou des assistants personnels numériques (en anglais "personal digital assistants" ou PDA), casiers 105 à 108, ou qu'ils sont destinés à recevoir des ordinateurs portables, tiroirs 170 et 171. Les premiers, pour téléphones mobiles ou PDA, peuvent être munis de socles sur lesquels reposent les système électroniques portables au cours de leur recharge. Les seconds, pour ordinateur, prennent ici la forme de tiroirs montés sur glissières.

Les casiers 105 à 108 peuvent être fermés par les moyens de verrouillage 164, par exemple des aimants ventouses de type connu.

Les raccords d'alimentation 160 à 163 correspondent aux différents types de raccords présents sur les téléphones portables du marché.

Les tiroirs 170 et 171 sont mis en mouvement pour leur ouverture ou leur fermeture par le système d'ouverture/fermeture automatique 166, de type connu, par exemple à moteur pas-à-pas. Chaque tiroir est munis d'un moyen de verrouillage 165, par exemple des aimants ventouse. Les raccords d'alimentation 180 à 183 sont adaptés à se connecter aux différentes prises d'alimentation des ordinateurs portables présents sur le marché. Dans un but de concision, les tiroirs 170 et 171 sont appelés "casiers" dans la suite de la description.

Préférentiellement, le dispositif de recharge 100 comporte une alimentation de secours autonome, par exemple un onduleur ou une batterie capable d'alimenter le dispositif pendant une durée d'au moins vingt minutes.

Préférentiellement, les casiers 105 à 108 et les tiroirs 170 et 171 restent verrouillés en cas de coupure d'alimentation électrique du dispositif de recharge 100.

L'ordinateur 110 comporte, par exemple une carte PC industrielle de type connu. L'écran d'affichage 115, de type connu, par exemple à tube cathodique ou écran plat et l'écran tactile 120, de type connu, sont disposés de telle manière qu'un utilisateur puisse sélectionner une image ou un texte affiché sur l'écran 115. L'écran 115 affiche des images fournies par l'ordinateur 110 et l'écran tactile 120 transmet à l'ordinateur 110 un signal représentatif de la position d'un doigt de l'utilisateur sur l'écran. L'écran d'affichage 115 et l'écran tactile 120 réalisent une interface utilisateur adaptée, entre autre, à identifier chaque utilisateur.

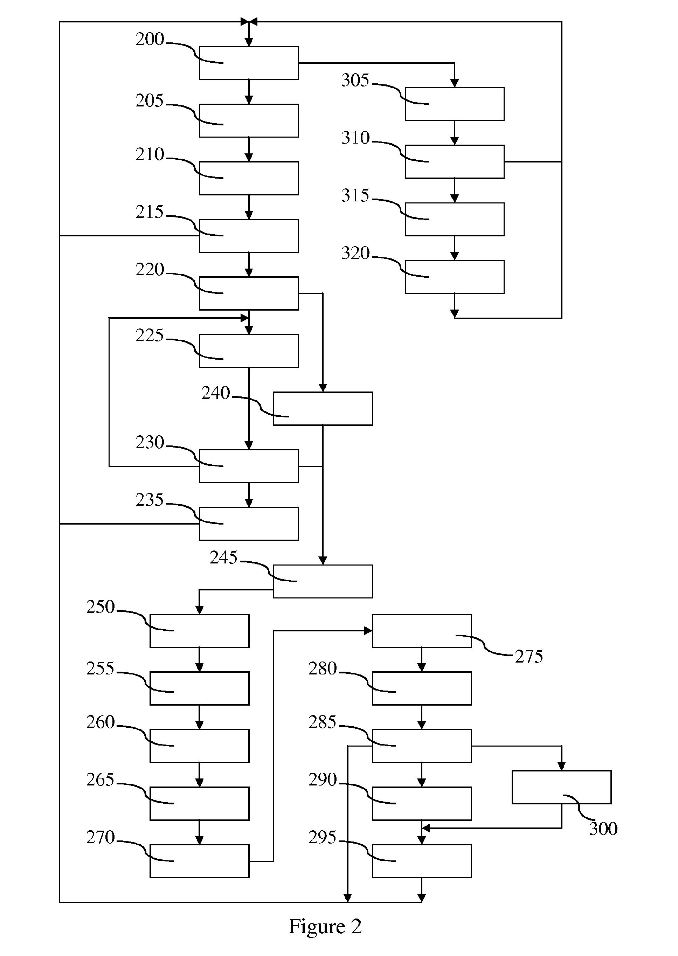

La mémoire de programme 125 conserve un programme informatique pour la mise en oeuvre du dispositif et du procédé objets de la présente invention, par exemple tel que décrit ci-dessous en regard de l'une des figures 1 ou 2. D'une manière générale, et comme exposé ci-dessous, l'ordinateur 110 et ses périphériques constituent conjointement un moyen de gestion des casiers adapté à contrôler, d'une part, l'alimentation électrique de la batterie des systèmes électroniques portables placés à l'intérieur des casiers et, d'autre part, l'accès à chaque casier (moyens de verrouillage 164 et 165 et systèmes d'ouverture/fermeture automatique 166).

La base de données 130 comporte les caractéristiques électriques de toutes les batteries équipant des ordinateurs, assistants personnels et téléphones mobiles. La base de données 130 peut être mise à jour par l'ordinateur 110, après interrogation d'une base de données conservée sur un serveur informatique distant, par l'intermédiaire du modem 132 et du réseau informatique 133.

Le modem 132 est de type connu par exemple dans le domaine des systèmes d'accès à Internet. Le réseau informatique 133 est de type connu, par exemple l'internet. Le lecteur de cartes à mémoire 134, de type connu, est adapté à lire des cartes bancaires, des cartes d'identification, des portes-monnaie électroniques. Le moyen de réception de pièces de monnaie ou monnayeur 131 est de type connu.

Les générateurs d'alimentation électrique 135 et 136 sont de type connu, par exemple des alimentations linéaires ou des alimentations à découpage. Le générateur 135 fournit une alimentation électrique pour les raccords pour ordinateurs portables et le générateur 136 fournit une alimentation électrique pour les raccords pour téléphones mobiles. Chaque générateur est contrôlé par un microcontrôleur (non représenté) relié à l'ordinateur 110.

Le circuit de régulation 140 correspondant à chaque casier est adapté à réguler la tension et l'ampérage de l'alimentation électrique fournie au système électronique portable contenu par ledit casier en fonction des caractéristiques du système électronique portable connecté à un raccord d'alimentation 160 à 163, afin d'optimiser son temps de recharge sans endommager sa batterie.

On rappelle qu'il existe différents types de batteries définis par la composition chimique. Pour les téléphones mobiles et les ordinateurs portables, les trois types les plus répandus sont Li-ion, Ni-Mh et Ni-Ch. Chaque type de batterie correspond à une courbe de charge/décharge différente, ainsi qu'à des caractéristiques propres à la batterie (tension et courant maximum accepté, température et pression, durée de vie ...). Chaque batterie peut être classée selon trois données : le type chimique, la tension moyenne d'utilisation (en Volts) et la capacité (en Ampère-heures). Les batteries peuvent cependant être rechargées jusqu'à cinq fois leur capacité sans être détériorées pendant une durée limitée.

L'ordinateur 110 reconnaît en temps réel le système électronique portable qui est connecté dans chaque casier, soit par l'intermédiaire de l'interface utilisateur (écran d'affichage 115 et écran tactile 120), soit par communication (non représentée) avec la batterie, lorsqu'elle est de type "smart batteries" (batterie capable de s'identifier) utilisées dans certains systèmes électroniques portables. L'ordinateur 110 analyse la base de données 130 pour connaître les caractéristiques de la batterie de ce système électronique portable et ajuste les paramètres de recharge (tension et courant) en fonction de ces caractéristiques. Les paramètres de recharge sont transmis au circuit de régulation 140 qui contrôle ensuite, à tout moment, l'état de la batterie et interrompt la recharge lorsque les valeurs requises sont atteintes.

Par sécurité, la recharge est effectuée à trois fois la capacité de la batterie, ce qui permet de réduire à environ vingt minutes la durée de la recharge.

La tension aux bornes du circuit de régulation 140 et de la batterie à laquelle il est relié, évoluent, au cours d'une recharge, de la manière suivante : lorsque la batterie est déchargée, la tension est inférieure à la tension nominale de la batterie, puis elle croît progressivement jusqu'à atteindre une tension maximale (lorsque la batterie est correctement rechargée) supérieure à la tension nominale de la batterie avant de décroître. Pour une recharge optimale et sécurisée, l'ordinateur 110 est adapté à recevoir, de la part du circuit de régulation 140, la tension aux bornes de la batterie et lorsqu'une baisse de tension est détectée, à interrompre l'alimentation électrique de la batterie. De plus, même si aucune baisse de tension n'est détectée aux bornes de la batterie, l'ordinateur 110 interrompt l'alimentation électrique de la batterie à la fin d'une durée de recharge maximale prédéterminée, par exemple 20 minutes.

En variante non représentée, l'alimentation électrique de la batterie est effectuée à partir d'un panneau solaire ou par induction.

L'interface utilisateur fonctionne de la manière suivante. Pour effectuer une sélection, l'utilisateur met son doigt sur la partie de l'écran d'affichage 115 qui affiche la sélection qu'il désire. L'écran tactile 120 détecte cette position et la transmet à l'ordinateur 110.

Après un intervalle de temps prédéterminé (par exemple une minute), lorsque aucune action est effectuée, un écran d'attente représentent les niveaux de recharge des batteries des appareils électronique présents dans chaque boîtier ou tiroir est affiché. Le premier écran de choix s'affiche lorsqu'une action sur l'écran tactile est effectuée.

Dès qu'un utilisateur touche l'écran, sur un premier écran, l'utilisateur sélectionne l'une des options "recharge ordinateur", "recharge téléphone" ou "restitution de l'appareil ".

Dès que l'utilisateur a sélectionné l'une des options de recharge, un deuxième écran lui demande la marque de son système électronique portable et lui propose une liste de marques, liste dans laquelle l'utilisateur peut choisir. Une fois cette sélection effectuée, un troisième écran demande à l'utilisateur le modèle de son système électronique et lui propose une liste de modèles pour la marque sélectionnée sur le deuxième écran.

Lorsque la sélection du modèle a été effectuée par l'utilisateur, l'ordinateur 110 sélectionne un casier vide et indique son numéro à l'utilisateur tout en ouvrant la serrure électrique de ce casier. L'utilisateur peut alors placer son système électronique dans le casier indiqué et le connecter au raccord d'alimentation correspondant au système électronique.

Une fois que le raccordement a été détecté, un quatrième écran demande à l'utilisateur le moyen de paiement qu'il veut utiliser, en monnaie ou par carte bancaire. Lorsque l'utilisateur a choisi le mode de paiement, un cinquième écran l'invite à acquitter la somme correspondant à la recharge, par exemple 1 euro ou un dollar.

Avant ou après le paiement effectué par l'intermédiaire du lecteur de carte à mémoire (avec saisie d'un code secret conservé par la carte bancaire) 134 ou du moyen de réception de pièces de monnaie 131, de manière classique, un sixième écran indique à l'utilisateur le code secret qui sera nécessaire pour retirer le système électronique portable. Selon les variantes :
- un code secret, choisi par l'utilisateur, est saisi par celui-ci sur un écran dédié pour provoquer le verrouillage (et, dans le cas des tiroirs 170 et 171, la fermeture) de l'accès au contenu du casier considéré par le moyen de verrouillage correspondant,
- si l'utilisateur a payé avec une carte d'abonnement, une carte de porte-monnaie électronique, ou toute autre carte à mémoire, ce code secret est le code secret de la carte considérée,
- si l'utilisateur recharge un ordinateur et qu'il fournit son numéro de téléphone mobile, un code secret est transmis automatiquement par l'intermédiaire du modem, du réseau informatique et d'un message SMS sur le téléphone mobile de l'utilisateur,
- un code secret est imprimé par l'imprimante 112, sur un ticket qui est remis à l'utilisateur.

Dans les deux derniers cas, l'ordinateur comporte un moyen de transfert permanent du code secret à l'utilisateur, par le biais de la mémoire du téléphone mobile ou du ticket remis à l'utilisateur et, préférentiellement, avant la fermeture du casier et avant le paiement, il est demandé à l'utilisateur s'il a bien reçu le code secret.

Enfin, le casier est immédiatement verrouillé par le moyen de verrouillage correspondant.

En variante, l'ordinateur détermine le niveau de charge de la batterie du systèmes électronique portable, estime le délai de recharge et l'indique à l'utilisateur.

Si, sur le premier écran, l'utilisateur sélectionne l'option "restitution de l'appareil", sur un septième écran, il est demandé à l'utilisateur de saisir le code secret et, préférentiellement, le numéro du casier où se trouve son système électronique portable. Au cas où l'utilisateur a fourni son numéro de téléphone et qu'il a oublié le code secret, ce numéro de téléphone sert de code secret de substitution pour récupérer son système électronique portable. Après vérification du code secret, la serrure du casier correspondant au système électronique portable de l'utilisateur est déverrouillée par le moyen de verrouillage correspondant (et, dans le cas des tiroirs 170 et 171, l'ouverture), provoqué par l'ordinateur 110 et un huitième écran invite l'utilisateur à retirer le système électronique portable du casier en question.

En variante, le code secret est remplacé par une information confidentielle que seul l'utilisateur est sensé connaître, par exemple son nom et son prénom, son adresse, les premiers numéros de son numéro de sécurité sociale, ... Cette information est demandée avant le paiement puis, lors du retrait du système électronique portable, avant le déverrouillage de la porte du casier.

Selon des variantes non représentées, le dispositif de recharge comporte un moyen de connexion entre le système informatique portable et le réseau informatique 133, par connexion avec ou sans fil (par exemple WIFI), sans qu'il soit nécessairement besoin que l'utilisateur introduise son système informatique portable dans l'un des casiers.

Préférentiellement, l'ordinateur 110 est muni de moyens de protection contre les attaques pouvant provenir du réseau informatique 133, par exemple coupe-feu (en anglais "firewall"), proxy, boîtier anti-virus, filtre d'adresses électroniques connues sous le nom de "URL" (pour "uniform ressource locator"), ...

On observe, en figure 2, une étape 200 au cours de laquelle, on affiche le premier écran (menu d'accueil) jusqu'à ce qu'un utilisateur choisisse soit de demander une recharge de système électronique portable auquel cas on effectue l'étape 205, soit de retirer un système électronique portable, auquel cas on effectue l'étape 305.

Au cours de l'étape 205, l'utilisateur sélectionne la marque et le modèle de son système électronique portable. Au cours d'une étape 210, on vérifie qu'un casier pouvant recevoir le système électronique portable est disponible, sinon, on affiche un écran demandant à l'utilisateur de patienter jusqu'à ce qu'un casier soit disponible, étape 215 et on retourne à l'étape 200. Si un casier est disponible, au cours d'une étape 220, on demande à l'utilisateur de choisir un mode de paiement. Si un paiement par carte à mémoire est sélectionné, au cours d'une étape 225, l'utilisateur introduit une carte bancaire dans le lecteur de cartes à mémoire 134 et saisit son code secret (connu sous le nom de PIN code pour "personal identification number"). Au cours d'une étape 230, on lit le code secret en mémoire de la carte bancaire et on vérifie le code secret. Si le code secret saisi par l'utilisateur est erroné, on retourne à l'étape 225 sauf si trois codes secrets erronés ont été saisis successivement, auquel cas on retourne à l'étape 200 après avoir libéré la carte bancaire, étape 235. Si le code secret est correct ou si l'utilisateur a sélectionné le mode de paiement par monnaie et à introduit la somme requise dans le monnayeur, étape 240, au cours d'une étape 245, on indique le numéro du casier à l'utilisateur et on ouvre le casier en question (déverrouillage de la porte et, éventuellement, ouverture de la porte par un moteur non représenté).

Puis, au cours d'une étape 250, on attend que l'utilisateur ait raccordé son système électronique portable à l'un des raccords du casier en question et qu'il referme la porte de ce casier. La fermeture du casier est détectée au cours d'une étape 255. Puis, au cours d'une étape 260, on détermine un code secret comme indiqué en regard de la figure 1 et, éventuellement, on vérifie que l'utilisateur a bien reçu le code secret. On met alors le code secret en mémoire, étape 265, préférentiellement dans une mémoire permanente qui n'est pas effacée en cas de coupure d'alimentation, par exemple un disque dur et on verrouille l'ouverture du casier, étape 270. Puis, on détermine l'état de charge de la batterie, étape 275, en fonction de ses caractéristiques électriques, on estime la durée de recharge en fonction de l'état de charge de la batterie et des caractéristiques électriques de la batterie conservée dans la base de données, étape 280, et on lance la recharge du système électronique portable, étape 285, de manière régulée comme indiqué ci-dessus, on lance une temporisation d'une durée prédéterminée, par exemple 20 minutes, affectée au casier en question et on retourne à l'étape 200, tout en effectuant l'étape 290.

Au cours de l'étape 290, on surveille si la tension aux bornes de la batterie décroît. Si c'est le cas, au cours d'une étape 295, on interrompt la recharge de la batterie et on retourne à l'étape 200.

Lorsqu'une temporisation est achevée, étape 300, on interrompt la recharge de la batterie, étape 295, et on retourne à l'étape 200.

Au cours de l'étape 305, on demande à l'utilisateur d'indiquer le code secret déterminé au cours de l'étape 260 et, éventuellement, le numéro du casier dans lequel se trouve son système électronique portable. L'utilisateur saisit son code secret au cours d'une étape 310. Au bout de trois saisies de codes secrets invalides, on retourne à l'étape 200. Si le code secret saisi est correct, au cours d'une étape 315, on interrompt la recharge dans le casier en question et, au cours d'une étape 320, on déverrouille le casier en question et on l'ouvre ou on permet son ouverture par l'utilisateur. On retourne alors à l'étape 200.

## Revendications

1. Dispositif de recharge (100) de systèmes électroniques portables (150, 155) comportant :
- au moins un casier (105 à 108, 170, 171) de protection de système électronique portable en cours de recharge,
- au moins un moyen d'alimentation électrique (135, 136, 137, 140) d'une batterie (151, 156) de système électronique portable dans chaque dit casier,
**caractérisé en ce qu'**il comporte, en outre, un moyen de gestion de casier (110) adapté à contrôler, d'une part, l'accès à chaque casier et, d'autre part, l'alimentation électrique de la batterie d'un système électronique portable placé à l'intérieur d'un casier en fournissant une capacité supérieure à la capacité de la batterie, le moyen de gestion conservant au moins une durée d'alimentation maximale prédéterminée et étant adapté à interrompre l'alimentation électrique de chaque batterie de système électronique portable après une durée d'alimentation maximale prédéterminée.

2. Dispositif selon la revendication 1, **caractérisé en ce que** le moyen de gestion comporte une base de données (130) de caractéristiques électriques de différents types de système électronique portable.

3. Dispositif selon la revendications 2, **caractérisé en ce que** le moyen de gestion comporte un moyen de communication (132) sur un réseau informatique (133) et est adapté à mettre à jour la base de données de caractéristiques électriques de batteries de systèmes électroniques portables.

4. Dispositif selon l'une quelconque des revendications 1 à 3, **caractérisé en ce qu'**il comporte un moyen de détection (140, 110) de diminution de la tension aux bornes de la batterie et **en ce que** le moyen de gestion est adapté à commander l'arrêt de l'alimentation électrique lorsque le moyen de détection détecte une diminution de la tension aux bornes de la batterie.

5. Dispositif selon l'une quelconque des revendications 1 à 4, **caractérisé en ce que** le moyen de gestion comporte un moyen de lecture de carte à mémoire (134) conservant un code secret et le moyen de gestion est adapté à commander l'ouverture d'un casier après fourniture par l'utilisateur dudit code secret et vérification que ledit code secret correspond au code secret conservé par la carte à mémoire.

6. Dispositif selon l'une quelconque des revendications 1 à 5, **caractérisé en ce que** le moyen de gestion comporte un moyen de transfert permanent à l'utilisateur d'un code secret (112) et le moyen de gestion est adapté à commander l'ouverture d'un casier après fourniture par l'utilisateur dudit code secret et vérification que ledit code secret correspond au code secret transmis à l'utilisateur.

7. Procédé de recharge de systèmes électroniques portables (150, 155) comportant une étape d'ouverture (245) d'un casier de protection (105 à 108, 170, 171) de système électronique portable, une étape de fermeture (250, 255, 270) dudit casier, **caractérisé en ce qu'**il comporte :
- une étape de recharge (285) d'une batterie dudit système électronique portable en fournissant une capacité supérieure à la capacité de la batterie, au cours de laquelle l'alimentation électrique de chaque batterie de système électronique portable est interrompue après une durée d'alimentation maximale prédéterminée conservée en mémoire,
- une étape d'identification (305, 310) dudit utilisateur,
- une étape d'ouverture (320) dudit casier lorsque l'utilisateur est identifié.
